# EUROPÄISCHE PATENTSCHRIFT

(11) **EP 2 295 647 B1**
(45) Veröffentlichungstag und Bekanntmachung des Hinweises auf die Patenterteilung: **24.10.2012**
(21) Anmeldenummer: 10450132.5
(22) Anmeldetag: 12.08.2010
(51) Int. Cl.: E02D 33/00

(54) **Prüfverfahren für Pfähle**
Inspection method for piles
Procédé de contrôle pour poteaux

(30) Priorität: 13.08.2009 AT 12722009
(43) Veröffentlichungstag der Anmeldung: 16.03.2011
(73) Patentinhaber: Grund- Pfahl- und Sonderbau GmbH, 2325 Himberg (AT)
(72) Erfinder: Hayden, Martin, 2560 Hernstein (AT)
(74) Vertreter: KLIMENT & HENHAPEL

(56) Entgegenhaltungen:
- WO-A2-2006/015278
- DE-A1- 4 215 383
- GB-A- 504 625
- JP-A- 60 080 619

## Beschreibung

Die Erfindung betrifft eine Prüfanordnung für die Ermittlung der Tragfähigkeit eines, in einem Untergrund eingesetzten Pfahles mit einem Pfahlfuß, einem Pfahlkopf, einem Pfahlschaft als äußerer Begrenzung und einem Rohrschaft als innerer Begrenzung, sowie einem mit dem Rohrschaft verbundenen Messkopf, wobei ein hydraulisches Element für Zug- oder Druckbelastungen des Pfahles vorgesehen ist, sowie Verschiebungsaufnehmer zur Messung axialer Verschiebungen des Pfahles, gemäß dem Oberbegriff von Anspruch 1. Die Erfindung betrifft des Weiteren ein Prüfverfahren für die Ermittlung der Tragfähigkeit eines solchen, in einem Untergrund eingesetzten Pfahles und einem mit dem Rohrschaft verbundenen Messkopf, wobei der Pfahl mithilfe eines hydraulischen Elements auf Zug oder Druck belastet wird, und axiale Verschiebungen des Pfahles gemessen werden, gemäß dem Oberbegriff von Anspruch 7.

Die Tragfähigkeit von Pfählen wird durch die Eigenschaften des Baugrundes, die die so genannte äußere Tragfähigkeit des Pfahles festlegen, *und* des Pfahles selbst bestimmt. Der *Pfahl* selbst muss die auf ihn einwirkenden Beanspruchungen ohne Überschreiten der zulässigen Spannungen übertragen können, wodurch die so genannte innere Tragfähigkeit festgelegt wird.

Die innere Tragfähigkeit von Pfählen kann mit den Kenntnissen der Statik und der Baustoffkunde im Allgemeinen ohne Schwierigkeiten nachgewiesen werden. Die *äußere* Tragfähigkeit eines Pfahles hängt hingegen vom Baugrund und dessen Eigenschaften, den Grundwasserverhältnissen, der Pfahlform und -querschnittsfläche, dem Baustoff, der Beschaffenheit der Mantelfläche, der Ausbildung des Pfahlfußes, der Pfahlstellung, dem Pfahlabstand, sowie von der Einbringungsart ab. Die Krafteinleitung in den Baugrund erfolgt dabei über den Spitzenwiderstand und/oder über die Mantelreibung des Pfahles. Diese Größen können in der Regel nur durch Probebelastungen von Pfählen experimentell bestimmt werden, wobei sie vorzugsweise vor Ort, oder in der Nähe vergleichbarer Baugrundverhältnisse anzuordnen sind, damit die Durchführung und Auswertung solcher Versuche gesicherte und aussagekräftige Schlussfolgerungen erlauben. Ergebnisse dieser aufwändigen Probebelastungen sind Last-Zeit-Diagramme, Last-Setzungs-Diagramme, sowie Zeit-Setzungs-Diagramme, die während unterschiedlicher Belastungen durch entsprechende hydraulische Elemente mithilfe von Verschiebungsaufnehmern ermittelt werden.

Es gibt hierbei verschiedene Methoden, Pfahlwiderstände durch Probebelastungen zu bestimmen. Im Falle der Durchführung eines konventionellen Druckversuches wird der Probepfahl mithilfe eines hydraulischen Elements auf Druck belastet, wobei für die Reaktionskräfte aus der Belastung des Prüfpfahles ein Widerlager geschaffen werden muss. Hierzu werden in der Regel mehrere Reaktionspfähle im Umkreis des Probepfahles im Untergrund verankert, über die entsprechende Zugkräfte in den Untergrund eingeleitet werden. Alternativ dazu können schwere Belastungsbrücken hergestellt werden, die jedoch die hohen Reaktionskräfte widerspiegeln müssen. Gemessen werden die am Probepfahl auftretenden Verschiebungen des Pfahlkopfes, die an den Reaktionspfählen auftretenden Hebungen, sowie die aufgebrachte Druckkraft. Dabei ist jedenfalls auf eine unerwünschte, gegenseitige Beeinflussung der Reaktions- und Probepfähle zu ächten, daher werden bevorzugt Varianten mit geneigten Reaktionspfählen gewählt, oder der Abstand zwischen Reaktionspfähle und Probepfähle wird hinreichend groß gewählt, da dann der Boden in der Nähe des Pfahlfußes bzw. Pfahlmantels am wenigsten gestört ist.

Im Falle der Durchführung eines konventionellen Zugversuches wird ein Prüfstab zur Aufnahme und Verteilung der Zugkräfte über die gesamte Pfahllänge in das Pfahlrohr, das mit Verpressgut verfüllt ist, eingesetzt. In weiterer Folge werden die am Prüfstab aufgebrachte Zugkraft und die Verschiebungen des Pfahlkopfes gemessen. Als Reaktionssystem dienen in der Regel Betonlastverteilungsplatten, die auf den umliegenden Boden wirken. Dabei ist wiederum darauf zu achten, dass eine unerwünschte, gegenseitige Beeinflussung ausgeschlossen wird.

Bei einem weiteren, bekannten Verfahren wird eine so genannte Osterberg-Zelle verwendet, bei der es sich im Wesentlichen um ein expandierendes hydraulisches Element handelt, das in unterschiedlichen Tiefen in ein zuvor angefertigtes Bohrloch gemeinsam mit dem Bewehrungskorb eingesetzt und einbetoniert wird. Durch Expansion der Osterberg-Zelle wird der Probepfahl anschließend belastet. Abhängig von der relativen Größe des Wertes der Mantelreibung und des Spitzenwiderstands wird dabei der Pfahl entweder mit einer Bruchlast am Pfahlfuß, oder rund um den Mantel belastet. Weiter ist aus DE 42 15 383 A1 eine Prüfanordnung entsprechend dem Oberbegriff des Anspruch 1 bekannt.

Alle bekannten Verfahren teilen den Nachteil des hohen Prüfaufwandes, und der damit verbundenen hohen Kosten. Aber auch in technischer Hinsicht ist die Verlässlichkeit der so gewonnenen Daten begrenzt, da etwa eingesetzte Reaktionspfähle, die in der realen Belastungssituation nicht vorhanden sind, über die Veränderungen des Untergrundes das Messergebnis beeinflussen können. Des Weiteren ist es mit bekannten Verfahren nicht möglich, den Spitzenwiderstand und die Mantelreibung getrennt zu ermitteln (ausgenommen Osterbergzelle), und somit deren jeweiliger Anteil an der Tragfähigkeit eines Pfahles in einem bestimmten Untergrund zu erhalten.

Es ist somit das Ziel der Erfindung, diese Nachteile zu vermeiden und eine Prüfanordnung sowie ein Prüfverfahren zu schaffen, das kostengünstiger verwirklicht werden kann. Insbesondere soll die erfindungsgemäße Anordnung bzw. das erfindungsgemäße Prüfverfahren auch eine getrennte Ermittlung von Spitzenwiderstand und Mantelreibung erlauben, um so zuverlässigere Daten über die Tragfähigkeit von Pfählen zu gewinnen. Bevorzugt soll dabei die Erfindung im Zusammenhang mit Micro- und/oder Verdrängungspfählen einsetzbar sein. Der Pfahlkopf befindet sich oberhalb des Untergrundes (Voraushub-Unterkante) und wird je nach statischer Erfordernis mit einer Druckverteilungsplatte oder einer Anschlussbewehrung ausgebildet.

Diese Ziele werden durch die Merkmale von Anspruch 1 bzw. 7 erfüllt. Anspruch 1 bezieht sich dabei auf eine Prüfanordnung für die Ermittlung der Tragfähigkeit eines, in einem Untergrund eingesetzten Pfahles mit einem Pfahlfuß, einem Pfahlkopf, einem Pfahlschaft als äußerer Begrenzung und einem Rohrschaft als innerer Begrenzung, sowie einem mit dem Rohrschaft verbundenen Messkopf, wobei ein hydraulisches Element für Zug- oder Druckbelastungen des Pfahles vorgesehen ist, sowie Verschiebungsaufnehmer zur Messung axialer Verschiebungen des Pfahles. Erfindungsgemäß wird hierbei vorgeschlagen, dass der Pfahlfuß relativ zum Pfahlschaft axial verschiebbar ausgeführt ist, sowie ein Prüfstab vorgesehen ist, der mit seinem ersten Ende auf dem Pfahlfuß ruht, und das hydraulische Element einerseits den Prüfstab an seinem zweiten Ende axial belastet, und sich andererseits am Messkopf abstützt, wobei Verschiebungsaufnehmer für Verschiebungen des Prüfstabes, sowie des Messkopfes und/oder des Pfahlkopfes vorgesehen sind. Die erfindungsgemäße Prüfanordnung ist somit im Rahmen von Einzelpfahl-Probebelastungsversuchen anwendbar, ohne dass etwa die Verankerung zusätzlicher Reaktionspfähle und dergleichen erforderlich wäre. Stattdessen wird mithilfe eines hydraulischen Elements einerseits der Pfahlfuß belastet, wobei Verschiebungen des Pfahlfußes bei bekannter Druckkraft Aufschlüsse über den Spitzenwiderstand erlauben. Andererseits stützt sich das hydraulische Element am Messkopf ab, der mit dem Rohrschaft verbunden ist, sodass Zugkräfte auf den Pfahlschaft wirken. Bei bekannter Zugkraft sind somit mithilfe gemessener Hebungen des Pfahlschaftes Rückschlüsse auf die Mantelreibung möglich. Wesentlich ist hierbei, dass der Pfahlfuß relativ zum Pfahlschaft axial verschiebbar ausgeführt ist. In der Praxis wird eine Überlagerung von Senkungen des Pfahlfußes, sowie von Hebungen des Pfahlschaftes stattfinden, die getrennt erfasst und ausgewertet werden können. Aufwändige Belastungsbrücken, oder die Verankerung zusätzlicher Reaktionspfähle sind mithilfe der erfindungsgemäßen Prüfanordnung nicht mehr erforderlich.

In einer bevorzugten Ausführungsform kann vorgesehen sein, dass der Messkopf mit einem Hüllrohr für den Prüfstab verbunden ist, wobei das Hüllrohr mit dem Rohrschaft statisch verbunden ist. Vorzugsweise erfolgt dabei die statische Verbindung zwischen Hüllrohr und Rohrschaft mittels einer Betonfüllung zwischen Hüllrohr und Rohrschaft. Diese Anordnung ist im Rahmen so genannter Hochleistungsverdrängerpfähle ("HLV®-Pfähle") vorteilhaft, wie noch näher ausgeführt werden wird.

Wie ebenfalls im Folgenden noch näher erläutert werden wird, stellt es eine vorteilhafte Maßnahme dar, wenn zwischen Messkopf und Hüllrohr ein axiales Verbindungsstück angeordnet ist. Dadurch können nämlich wesentliche Teile der erfindungsgemäßen Prüfanordnung wieder verwendet werden, wodurch die Gesamtkosten verringert werden.

Vorzugsweise weist des Weiteren der Messkopf eine obere Messkopfplatte auf, an der sich das hydraulische Element abstützt und die über Zugglieder mit einer unteren Messkopfplatte verbunden ist, die einen Durchbruch für den Prüfstab aufweist und am Hüllrohr befestigt ist. Dabei können Verschiebungsaufnehmer an der unteren Messkopfplatte und/oder am Pfahlkopf angeordnet werden, sowie im Kontaktbereich zwischen Prüfstab und hydraulischem Element. Diese Verschiebungsaufnehmer dienen der getrennten Erfassung von Spitzenwiderstand und Mantelreibung.

Schließlich wird ein Prüfverfahren für die Ermittlung der Tragfähigkeit eines, in einem Untergrund eingesetzten Pfahles mit einem Pfahlfuß, einem Pfahlkopf, einem Pfahlschaft als äußerer Begrenzung und einem Rohrschaft als innerer Begrenzung, sowie einem mit dem Rohrschaft verbundenen Messkopf, wobei der Pfahl mithilfe eines hydraulischen Elements auf Zug oder Druck belastet wird, und axiale Verschiebungen des Pfahles gemessen werden. Erfindungsgemäß wird hierbei vorgeschlagen, dass mittels eines axial verschiebbaren, auf dem relativ zum Pfahlschaft axial verschiebbaren Pfahlfuß ruhenden und mit dem Messkopf über das hydraulische Element kinematisch verbundenen Prüfstabes Verschiebungen des Prüfstabes, sowie des Messkopfes und/oder des Pfahlkopfes gemessen werden. Dieses Prüfverfahren liegt einer oben erläuterten Prüfanordnung zu Grunde.

Die Erfindung wird im Folgenden anhand von Ausführungsbeispielen mithilfe der beiliegenden Zeichnungen näher erläutert. Es zeigen hierbei die
Fig. 1 einen Schnitt entlang der Ebene 1-1 gemäß der Fig. 2 bis 4 einer Ausführungsform einer erfindungsgemäßen Prüfanordnung anhand des Beispieles eines HLV®-Pfahl-Systems,
Fig. 2 eine Draufsicht auf die Prüfanordnung gemäß der Fig. 1,
Fig. 3 einen Schnitt entlang der Ebene A-A der Fig. 1,
Fig. 4 einen Schnitt entlang der Ebene B-B der Fig. 1, und die
Fig. 5 eine Ansicht der oberen Abschnitte einer erfindungsgemäßen Prüfanordnung.

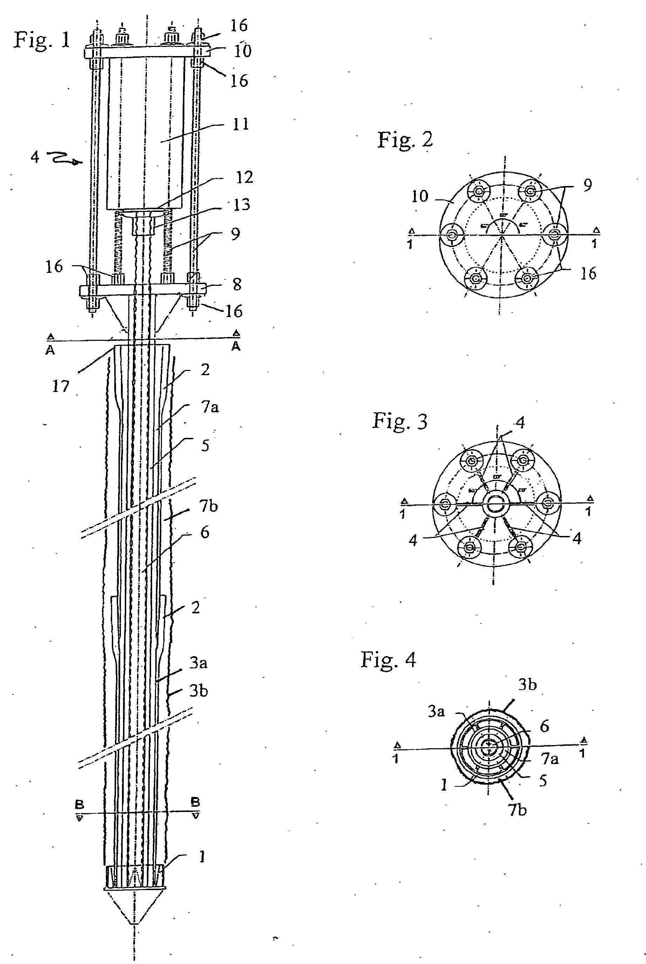

Zunächst wird auf die Fig. 1 Bezug genommen, die eine Ausführungsform einer erfindungsgemäßen Prüfanordnung anhand des Beispieles eines HLV®-Pfahl-Systems zeigt. Die Herstellung von HLV®-Pfählen aus duktilem Gusseisen erfolgt etwa mit einem hydraulischen Schnellschlaghammer. Dabei wird der erste Rohrschuss mit einem Pfahlfuß 1 versehen, die auch als Pfahlfußkappe bezeichnet wird, an den Untergrund angesetzt und eingerammt. Anschließend werden die nächsten Rohrschüsse aufgenommen und in die konische Muffe 2 des unmittelbar davor eingerammten Rohres eingesetzt, wobei durch den Rammvorgang eine starre, kraftschlüssige Verbindung entsteht. Auf diese Weise wird ein durchgehender Rohrschaft 3a gebildet. Der Pfahl wird auf die Endtiefe, die durch Erreichung der erforderlichen Tragfähigkeit festgelegt ist, abgeteuft. Im Zuge des Rammvorganges wird in die Pfahlrohre über ein spezielles Schlagstück Verpressgut, in der Regel Betonmörtel, eingepresst, das durch entsprechende Austrittsöffnungen über dem Pfahlfuß 1 austritt und über Mantelverpressung den Verbund 7b zwischen Rohrschaft 3a und Pfahlschaft 3b herstellt.

HLV®-Pfähle werden größten Teils verpresst hergestellt, und tragen die Lasten über eine Kombination aus Mantelreibung und Spitzenwiderstand in den Untergrund ab. Die Aufteilung dieser beiden Lastabtragungskomponenten wird im Wesentlichen durch die vorliegenden Untergrundverhältnisse bestimmt. Die Pfahllänge richtet sich nach der statisch erforderlichen Einbindelänge in den tragfähigen Boden, sowie der Tiefenlage der tragfähigen Schicht. Die Lage der tragfähigen Bodenschicht wird auch, wie beim Spitzendruckpfahl, über die Eindringgeschwindigkeit des Pfahles beim Rammen festgestellt.

Pfahlversuche an derart hergestellten Pfählen liefern in der Regel Messdaten, wie beispielsweise Kräfte und Verschiebungen, woraus in weiterer Folge die Tragfähigkeit von Pfählen abgeleitet werden kann. Bei der erfindungsgemäßen Prüfanordnung handelt es sich dabei um einen bidirektionalen Versuch, wobei durch die Wirkungsweise in zwei Richtungen, nämlich aufwärts entgegen dem Scherwiderstand der Mantelreibung und abwärts entgegen dem Spitzenwiderstand, die Widerstandanteile getrennt voneinander erfasst werden können. Dabei wird zur Aufnahme und Verteilung der Zugkräfte über die gesamte Pfahllänge ein Hüllrohr 5, zumeist ein Stahlrohr, eingebaut, das mit dem Rohrschaft 3a über eine Betonfüllung 7a statisch verbunden ist. Bewegungen des Hüllrohres 5 übertragen sich somit unmittelbar auf den Pfahlschaft 3b. Innerhalb des Hüllrohres 5 wird der Prüfstab 6, etwa ein Gewinde-Druckstab ("Gewi®-Druckstab") axial verschiebbar eingesetzt. Der Pfahlfuß 1 fungiert dabei in Verbindung mit dem umgebenden Boden als Widerlager, und ist relativ zum Pfahlschaft 3b axial verschiebbar ausgeführt.

Alternativ dazu wäre es auch denkbar, dass kein separates Hüllrohr 5 vorgesehen ist, und der Messkopf 4 unmittelbar mit dem Rohrschaft 3a verbunden ist.

Oberhalb des Untergrundes, etwa in der Ebene A-A der Fig. 1, befindet sich der Messkopf 4, der in der gezeigten Ausführungsform über das Hüllrohr 5 und der Betonfüllung 7a mit dem Rohrschaft 3a verbunden ist. Der Messkopf 4 weist eine untere Messkopfplatte 8 auf, die einen Durchbruch für den Prüfstab 6 aufweist, und über Zugglieder 9 mit einer oberen Messkopfplatte 10 starr verbunden ist. Die Zugglieder 9 sind über Befestigungsmuttern 16 an der unteren Messkopfplatte 8 und der oberen Messkopfplatte 10 befestigt. Die obere Messkopfplatte 10 dient als Widerlager für ein hydraulisches Element 11, welches auf dem Ankermutterteller 13 aufliegt. Der Stempel 12 des hydraulischen Elements 11 ist dabei über eine Ankermutter des Ankermuttertellers 13 mit dem, im gezeigten Ausführungsbeispiel als Gewinde-Druckstab ausgeführten Prüfstab 6 verbunden. Das hydraulische Element 11 kann somit Zug- und Druckkräfte auf den Prüfstab 6 und den Messkopf 4 ausüben.

Die Fig. 2 zeigt eine Draufsicht auf die Prüfanordnung gemäß der Fig. 1, die Fig. 3 einen Schnitt entlang der Ebene A-A der Fig. 1, und die Fig. 4 einen Schnitt entlang der Ebene B-B der Fig. 1.

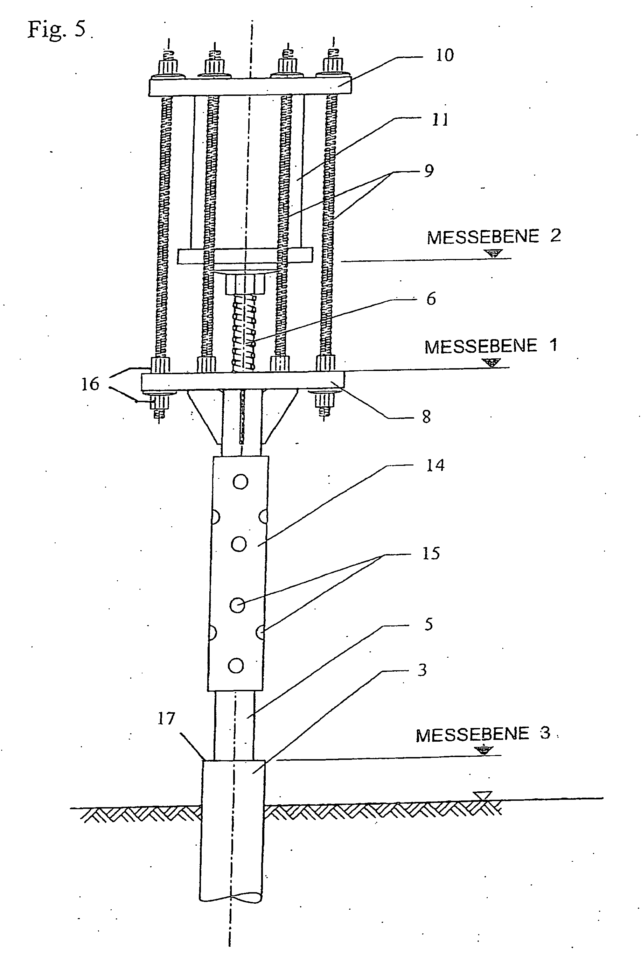

Die Fig. 5 zeigt eine Ansicht der oberen Abschnitte einer erfindungsgemäßen Prüfanordnung gemäß Fig. 1, wobei zwischen Messkopf 4 und Hüllrohr 5 ein axiales Verbindungsstück 14 angeordnet ist, das etwa als Verbindungsmuffe ausgeführt sein kann, und über Schweißlöcher 15 mit dem Hüllrohr 5 starr verbunden wird. Nach Abschluss einer Prüfung kann somit der obere Teil der Prüfanordnung vom Hüllrohr 5 getrennt werden. Auch der Prüfstab 6 kann dem Hüllrohr 5 entnommen und wieder verwendet werden. Dadurch können wesentliche Teile der erfindungsgemäßen Prüfanordnung wieder verwendet werden, wodurch die Gesamtkosten verringert werden.

Die Funktionsweise der erfindungsgemäßen Prüfanordnung wird nun wie folgt erläutert. Falls die Mantelreibung sehr viel höher ist als der Spitzenwiderstand, kann der Pfahlschaft 3b als annähernd unbeweglich angesehen werden. Somit kann auch der, über die Betonfüllung 7a und das Hüllrohr 5 statisch mit dem Pfahlschaft 3b verbundene Messkopf 4 als annähernd unbeweglich angesehen werden. Über die Zugglieder 9 bildet somit die obere Messkopfplatte 10 ein annähernd unbewegliches Widerlager für das hydraulische Element 11, das seine Druckkraft zur Gänze über den Prüfstab 6 auf den Pfahlfuß 1 ausübt. Der Pfahlfuß 1, der relativ zum Pfahlschaft 3b axial verschiebbar ausgeführt ist, wird somit nach unten verschoben. Über die bekannte Druckkraft und den Verschiebeweg des Pfahlfußes 1 kann somit der Spitzenwiderstand ermittelt werden. Hierzu sind Verschiebungsaufnehmer im Kontaktbereich zwischen Prüfstab 6 und hydraulischem Element 11 angeordnet (siehe "Messebene 2" in der Fig. 2), die den axialen Bewegungsweg des Prüfstabes 6, und somit des Pfahlfußes 1, messen. Die Auswertung erfolgt unter Berücksichtigung der elastischen Stauchung des Prüfstabes 6.

Falls andererseits der Pfahlfuß 1 als unbeweglich angesehen werden kann, bildet der Pfahlfuß 1 ein annähernd unbewegliches Widerlager für den Prüfstab 6. Eine Hubbewegung des hydraulischen Elements 11 drückt somit die obere Messkopfplatte 10 nach oben, wobei sich der Hub über die Zugglieder 9 auf die untere Messkopfplatte 8 überträgt. Somit werden der Messkopf 4, das Hüllrohr 5, sowie über die Betonfüllung 7a auch der Pfahlschaft 3b angehoben. Über die bekannte Druckkraft und den Verschiebeweg des Pfahlschaftes 3b kann somit die Mantelreibung ermittelt werden. Hierzu sind Verschiebungsaufnehmer an der unteren Messkopfplatte 8 angeordnet (siehe "Messebene 1" in der Fig. 5), die den axialen Bewegungsweg des Messkopfes 4, und somit des Pfahlschaftes 3b, messen.

In der Praxis wird jedoch in der Regel keiner der beiden oben beschriebenen Extremfälle auftreten, sondern es wird eine Überlagerung von Verschiebungen des Pfahlschaftes 3b, sowie des Pfahlfußes 1 vorliegen. Durch getrennte Messung des axialen Bewegungsweges von Messkopf 4 bzw. Pfahlkopf 17 und Prüfstab 6 können jedoch beide Messgrößen, also Spitzenwiderstand und Mantelreibung, getrennt voneinander ermittelt werden. Wahlweise können auch zusätzliche Messebenen vorgesehen sein (siehe etwa "Messebene 3" in der Fig. 5), um zusätzliche Messdaten zu gewinnen, etwa über die Dehnung des freien Hüllrohres 5. Des Weiteren kann das hydraulische Element 11 unterschiedliche Ausführungsformen aufweisen, solange es die erforderlichen Zug- oder Druckkräfte bereitstellen kann.

Mithilfe der Erfindung, die seitens der Anmelderin mittlerweile als "Pile-HAY-Proof-System" bezeichnet wird, gelingt es somit, eine kostengünstige Prüfanordnung zu schaffen, die insbesondere auch eine getrennte Ermittlung von Spitzenwiderstand und Mantelreibung erlaubt, und so zuverlässigere Daten über die Tragfähigkeit von Pfählen liefert. Durch eine Überlagerung der Lasten bei gleicher Setzung kann auch eine äquivalente Last-Setzungs-Linie, analog der Ergebnisse eines konventionellen Druckversuches, ermittelt werden.

## Patentansprüche

1. Prüfanordnung für die Ermittlung der Tragfähigkeit eines, in einem Untergrund eingesetzten Pfahles mit einem Pfahlfuß (1), einem Pfahlkopf (17), einem Pfahlschaft (3b) als äußerer Begrenzung und einem Rohrschaft (3a) als innerer Begrenzung, sowie einem mit dem Rohrschaft (3a) verbundenen Messkopf (4), wobei ein hydraulisches Element (11) für Zug- oder Druckbelastungen des Pfahles vorgesehen ist, sowie Verschiebungsaufnehmer zur Messung axialer Verschiebungen des Pfahles, **dadurch gekennzeichnet, dass** der Pfahlfuß (1) relativ zum Pfahlschaft (3b) axial verschiebbar ausgeführt ist, sowie ein Prüfstab (6) vorgesehen ist, der mit seinem ersten. Ende auf dem Pfahlfuß (1) ruht, und das hydraulische Element (11) einerseits den Prüfstab (6) an seinem zweiten Ende axial belastet, und sich andererseits am Messkopf (4) abstützt, wobei Verschiebungsaufnehmer für Verschiebungen des Prüfstabes (6), sowie des Messkopfes (4) und/oder des Pfahlkopfes (17) vorgesehen sind.

2. Prüfanordnung nach Anspruch 1, **dadurch gekennzeichnet, dass** der Messkopf (4) mit einem Hüllrohr (5) für den Prüfstab (6) verbunden ist, wobei das Hüllrohr (5) mit dem Rohrschaft (3a) statisch verbunden ist.

3. Prüfanordnung nach Anspruch 2, **dadurch gekennzeichnet, dass** die statische Verbindung zwischen Hüllrohr (5) und Rohrschaft (3a) mittels einer Betonfüllung (7a) zwischen Hüllrohr (5) und Rohrschaft (3a) erfolgt.

4. Prüfanordnung nach Anspruch 2 oder 3, **dadurch gekennzeichnet, dass** zwischen Messkopf (4) und Hüllrohr (5) ein axiales Verbindungsstück (14) angeordnet ist.

5. Prüfanordnung nach einem der Ansprüche 1 bis 4, **dadurch gekennzeichnet, dass** der Messkopf (4) eine obere Messkopfplatte (10) aufweist, an der sich das hydraulische Element (11) abstützt und die über Zugglieder (9) mit einer unteren Messkopfplatte (8) verbunden ist, die einen Durchbruch für den Prüfstab (6) aufweist und am Hüllrohr (5) befestigt ist.

6. Prüfanordnung nach Anspruch 5, **dadurch gekennzeichnet, dass** Verschiebungsaufnehmer an der unteren Auflagerplatte (8) oder am Pfahlkopf (17) angeordnet sind, sowie im Kontaktbereich zwischen Prüfstab (6) und hydraulischem Element (11).

7. Prüfverfahren für die Ermittlung der Tragfähigkeit eines, in einem Untergrund eingesetzten Pfahles mit einem Pfahlfuß (1), einem Pfahlkopf (17), einem Pfahlschaft (3b) als äußerer Begrenzung und einem Rohrschaft (3a) als innerer Begrenzung, sowie einem mit dem Rohrschaft (3a) verbundenen Messkopf (4), wobei der Pfahl mithilfe eines hydraulischen Elements (11) auf Zug oder Druck belastet wird, und axiale Verschiebungen des Pfahles gemessen werden, **dadurch gekennzeichnet, dass** mittels eines axial verschiebbaren, auf dem relativ zum Pfahlschaft (3b) axial verschiebbaren Pfahlfuß (1) ruhenden und mit dem Messkopf (4) über das hydraulische Element (11) kinematisch verbundenen Prüfstabes (6) Verschiebungen des Prüfstabes (6), sowie des Messkopfes (4) und/oder des Pfahlkopfes (17) gemessen werden.

## Claims

1. A testing arrangement for determining the carrying capacity of a pile inserted into the ground, comprising a pile base (1), a pile head (17), a pile shaft (3b) as the outer boundary and a tube shaft (3a) as the inner boundary, and comprising a measuring head (4) connected with the tube shaft (3a), with a hydraulic element (11) being provided for tensile and pressure loading of the pile, and a displacement sensor for measuring the axial displacements of the pile, **characterized in that** the pile base (1) is arranged in an axially displaceable manner relative to the pile shaft (3b), and a test rod (6) is provided which rests with its first end on the pile base (1), and the hydraulic element (11) axially loads the test rod (6) at its second end on the one hand and rests on the measuring head (4) on the other hand, with displacement sensors being provided for displacements of the test rod (6) and the measuring head (4) and/or the pile head (17).

2. A testing arrangement according to claim 1, **characterized in that** the measuring head (4) is connected with a jacket tube (5) for the testing rod (6), with the jacket tube (5) being statically connected with the tube shaft (3a).

3. A testing arrangement according to claim 2, **characterized in that** the static connection between the jacket tube (5) and the tube shaft (3a) occurs by means of a concrete filling (7a) between the jacket tube (5) and the tube shaft (3a).

4. A testing arrangement according to claim 2 or 3, **characterized in that** an axial connecting piece (14) is arranged between the measuring head (4) and the jacket tube (5).

5. A testing arrangement according to one of the claims 1 to 4, **characterized in that** the measuring head (4) comprises an upper measuring head plate (10), on which the hydraulic element (11) is supported and which is connected via tie rods (9) with a bottom measuring head plate (8) which comprises a breakthrough for the test rod (6) and is fastened to the jacket tube (5).

6. A testing arrangement according to claim 5, **characterized in that** displacement sensors are arranged on the bottom support plate (8) or on the pile head (17) and in the contact area between test rod (6) and hydraulic element (11).

7. A testing method for determining the carrying capacity of a pile inserted into the ground, said pile comprising a pile base (1), a pile head (17), a pile shaft (3b) as the outer boundary and a tube shaft (3a) as the inner boundary, and comprising a measuring head (4) connected with the tube shaft (3a), with the pile being tensioned or pressurized by means of a hydraulic element (11), and with axial displacements of the pile being measured, **characterized in that** displacements of the test rod (6) and the measuring head (4) and/or the pile head (17) are measured by means of an axially displaceable test rod (6), which rests on the pile base (1) that is axially displaceable relative to the pile shaft (3b) and which is kinematically connected with the measuring head (4) via the hydraulic element (11).

## Revendications

1. Dispositif d'essai pour déterminer la capacité portante d'un pieu introduit dans un sous-sol avec un pied de pieu (1), une tête de pieu (17), un fût de pieu (3b) formant la délimitation extérieure et un fût de tube (3a) formant la délimitation intérieure et avec une tête de mesure (4) reliée au fût de tube (3a), dans lequel il est prévu un élément hydraulique (11) pour exercer des contraintes de traction et de compression sur le pieu, ainsi que des capteurs de translation pour la mesure des translations axiales du pieu, **caractérisé en ce que** le pied du pieu (1) est capable de translation axiale par rapport au fût du pieu (3b) et il est prévu un barreau d'essai (6) qui repose par sa première extrémité sur le pied de pieu (1), et l'élément hydraulique (11) exerce une contrainte axiale sur le barreau d'essai (6) à sa deuxième extrémité tout en s'appuyant sur la tête de mesure (4), des capteurs de translation étant prévus pour les translations du barreau d'essai (6) ainsi que de la tête de mesure (4) et/ou de la tête du pieu (17).

2. Dispositif d'essai selon la revendication 1, **caractérisé en ce que** la tête de mesure (4) est reliée à un tube d'enveloppe (5) pour le barreau d'essai (6), lequel tube d'enveloppe (5) est relié de manière statique au fût de tube (3a).

3. Dispositif d'essai selon la revendication 2, **caractérisé en ce que** la liaison statique entre le tube d'enveloppe (5) et le fût de tube (3a) est réalisée au moyen d'un remplissage avec du béton (7a) entre le tube d'enveloppe (5) et le fût de tube (3a).

4. Dispositif d'essai selon la revendication 2 ou 3, **caractérisé en ce qu'**un élément de liaison axial (14) est disposé entre la tête de mesure (4) et le tube d'enveloppe (5).

5. Dispositif d'essai selon l'une des revendications 1 à 4, **caractérisé en ce que** la tête de mesure (4) présente une plaque de tête de mesure supérieure (10) sur laquelle s'appuie l'élément hydraulique (11) et qui est reliée par des éléments de traction (9) à une plaque de tête de mesure inférieure (8) qui présente une ouverture pour le barreau d'essai (6) et qui est fixée au tube d'enveloppe (5).

6. Dispositif d'essai selon la revendication 5, **caractérisé en ce que** le capteur de translation est disposé sur la plaque d'appui inférieure (8) ou sur la tête du pieu (17) ainsi que dans la zone de contact entre le barreau d'essai (6) et l'élément hydraulique (11).

7. Méthode d'essai pour déterminer la capacité portante d'un pieu introduit dans un sous-sol avec un pied de pieu (1), une tête de pieu (17), un fût de pieu (3b) formant la délimitation extérieure et un fût de tube (3a) formant la délimitation intérieure et avec une tête de mesure (4) reliée au fût de tube (3a), dans lequel le pieu est contraint en traction ou en compression à l'aide d'un élément hydraulique (11) et les translations axiales du pieu sont mesurées, **caractérisé en ce qu'**un barreau d'essai capable de translation axiale, reposant sur le pied du pieu (1) capable de translation axiale par rapport au fût du pieu (3b) et en liaison cinématique avec la tête de mesure (4) par l'intermédiaire de l'élément hydraulique (11), est utilisé pour mesurer les translations du barreau d'essai (6) et de la tête de mesure (4) et/ou de la tête du pieu (17).
